# EUROPEAN PATENT APPLICATION

(11) **EP 4 489 278 A1**
(43) Date of publication of application: **08.01.2025**
(21) Application number: 23183785.7
(22) Date of filing: 06.07.2023
(51) Int. Cl.: H02M 1/32, H02M 1/36, H02M 3/00, H02M 3/335

(54) **RESONANT HYBRID FLYBACK CONVERTER AND METHOD OF OPERATING THE SAME**

(71) Applicant: Tridonic GmbH & Co KG, 6851 Dornbirn (AT)
(72) Inventor: Schneider, Miguel Philipp, 6850 Dornbirn (AT); Maldoner, Jakob, 6850 Dornbirn (AT)
(74) Representative: Rupp, Christian

(57) **Abstract**

Disclosed is a resonant hybrid flyback converter (1), comprising inductively coupled primary-side and secondary-side circuits (11, 12); the primary-side circuit (11) comprising a high-side switch (111) and a low-side switch (112) arranged in series; and a control circuit (113). The control circuit (113) is operable to progressively ramp down a predefined initial duration (221, 22, T_{on,ls}) of the conduction phase of the low-side switch (112) until the converter (1) supplies a predefined target output voltage (VLED); save the down-ramped duration (222, 22, T_{on,ls}) of the conduction phase of the low-side switch (112); alternatingly drive the high-side switch (111) and the low-side switch (112) in accordance with an adjustable duration (21, T_{on,hs}) of the conduction phase of the high-side switch (111) in accordance with a regulated target input peak current (ÎN) of the converter (1), and the saved duration (222, 22, T_{on,ls}) of the conduction phase of the low-side switch (112); recall the saved duration (222, 22, T_{on,ls}) of the conduction phase of the low-side switch (112) following an interruption of operation of the converter (1); and proceed to the alternating drive operation. This avoids peak currents and visible flicker during a start-up of the converter.

## Description

### Technical Field

The present disclosure relates generally to the field of lighting technology, and in particular to a resonant hybrid flyback converter for LED loads and to a method of operating said converter.

### Background Art

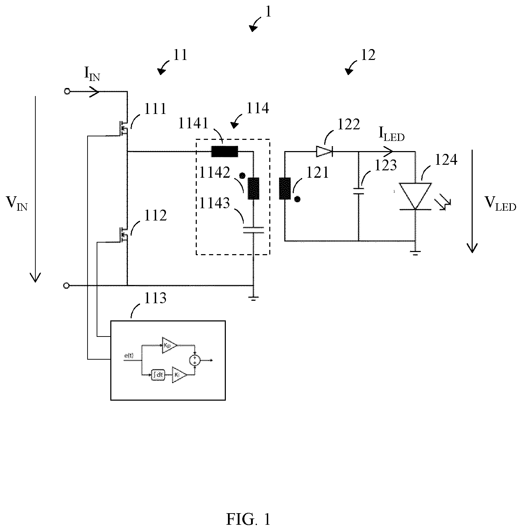

Resonant hybrid flyback converters typically comprise a high-side switch and a low-side switch arranged in series (see FIG. 1) and driven (i.e., being conductive) alternatingly so as to induce an oscillation-based power supply via a resonant tank circuit and a galvanic separation.

According to common practice, a duration of a conduction phase of the high-side switch may be manipulated by a closed-loop controller in accordance with a regulated target output/load/LED current (corresponding to a regulated target input peak current) of the converter, and a duration of a conduction phase of the low-side switch should be set in accordance with an output/load/LED voltage of the converter, i.e., depending on the load.

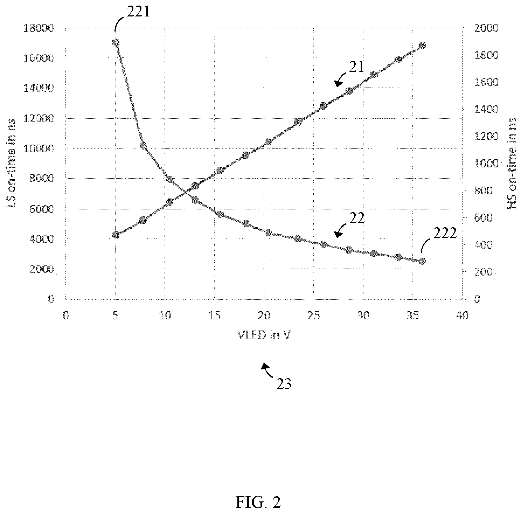

However, LED converters typically have no information of the load connected, despite the choice of various loads due to their wide output voltage range. Therefore, the start-up of an LED converter may involve a progressive ramp-down of the duration of the conduction phase of the low-side switch starting from a predefined initial duration, until the converter supplies a predefined target output voltage corresponding to the load (see FIG. 2).

The relatively slow closed-loop regulation of the output current may not be able to compensate for peak currents due to the ramp-down operation. Accordingly, every start-up of the converter may entail visible flicker.

### Summary

It is an object to overcome the above-mentioned and other drawbacks.

The foregoing and other objects are achieved by the features of the independent claims. Further implementation forms are apparent from the dependent claims, the description and the figures.

According to a first aspect, a resonant hybrid flyback converter is provided, comprising inductively coupled primary-side and secondary-side circuits; the primary-side circuit comprising a high-side switch and a low-side switch arranged in series; and a control circuit. The control circuit is operable to progressively ramp down a predefined initial duration of the conduction phase of the low-side switch until the converter supplies a predefined target output voltage; save the down-ramped duration of the conduction phase of the low-side switch; alternatingly drive the high-side switch and the low-side switch in accordance with an adjustable duration of the conduction phase of the high-side switch in accordance with a regulated target input peak current of the converter, and the saved duration of the conduction phase of the low-side switch; recall the saved duration of the conduction phase of the low-side switch following an interruption of operation of the converter; and proceed to the alternating drive operation.

The control circuit may further be operable to recall the saved duration of the conduction phase of the low-side switch for use as the predefined initial duration following an interruption of the operation of the converter; and to proceed to the progressive ramp down operation.

The control circuit may further be operable to delete the saved duration of the conduction phase of the low-side switch following an error condition; and to proceed to the progressive ramp down operation.

The error condition may comprise one or more of an error shutdown of the converter, and an error of a load.

The control circuit may further be operable to receive the saved duration of the conduction phase of the low-side switch via a management signaling; and to proceed to the alternating drive operation.

The primary-side circuit may further comprise a resonant tank circuit arranged between a common electric potential of the high-side and low-side switches and a ground electric potential.

The secondary-side circuit may comprise a current rectifying element, such as a diode.

The secondary-side circuit may further comprise a voltage smoothing element, such as a smoothing capacitor.

The control circuit may comprise a proportional-integral, PI, closed-loop controller.

The high-side and low-side switches may comprise field effect transistors, FETs.

According to a second aspect, a method of operating a resonant hybrid flyback converter is provided. The converter comprises inductively coupled primary-side and secondary-side circuits; and the primary-side circuit comprises a high-side switch and a low-side switch arranged in series. The method comprises progressively ramping down a predefined initial duration of the conduction phase of the low-side switch until the converter supplies a predefined target output voltage; saving the down-ramped duration of the conduction phase of the low-side switch; alternatingly driving the high-side switch and the low-side switch in accordance with an adjustable duration of the conduction phase of the high-side switch in accordance with a regulated target input peak current of the converter, and the saved duration of the conduction phase of the low-side switch; recalling the saved duration of the conduction phase of the low-side switch following an interruption of operation of the converter; and proceeding to the alternatingly driving step.

The method may be performed by the converter of the first aspect.

### Brief Description of Drawings

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.
FIG. 1 schematically illustrates a circuit topology of a resonant hybrid flyback converter in accordance with the present disclosure;
FIG. 2 illustrates a progressive ramp-down of the duration of the conduction phase of the low-side switch, versus an output/load/LED voltage;
FIG. 3 schematically illustrates the progressive ramp-down of the duration of the conduction phase of the low-side switch, versus time;
FIG. 4 schematically illustrates a step-down of the duration of the conduction phase of the low-side switch in accordance with the present disclosure, versus time;
FIG. 5 illustrates a known start-up operation versus time, involving the progressive ramp-down of the duration 22 of the conduction phase of the low-side switch;
FIG. 6 illustrates a start-up operation in accordance with the present disclosure versus time, involving the step-down of the duration of the conduction phase of the low-side switch; and
FIG. 7 illustrates a flow diagram of a method of operating a resonant hybrid flyback converter in accordance with the present disclosure.

### Detailed Descriptions of Drawings

In the following description, reference is made to the accompanying drawings, which form part of the disclosure, and which show, by way of illustration, specific aspects of implementations of the present disclosure or specific aspects in which implementations of the present disclosure may be used. It is understood that implementations of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

FIG. 1 schematically illustrates a circuit topology of a resonant hybrid flyback converter 1 in accordance with the present disclosure.

The converter 1 is connectable to a load 124 comprising a light-emitting diode, LED. The load 124 receives an output/load/LED voltage V_{LED} and an output/load/LED current I_{LED}.

The converter 1 comprises inductively coupled primary-side and secondary-side circuits 11, 12, whereas the terms 'primary' and 'secondary' indicate different ground electric potentials.

The primary-side circuit 11 comprises a high-side switch 111 and a low-side switch 112 arranged in series, i.e., a half-bridge switching circuit, whereas the term indicates a connectivity to a high electric potential and the term 'low-side' indicates a connectivity to a lower electric potential such as a ground electric potential. In particular, the high-side and low-side switches 111, 112 may comprise field effect transistors, FETs (see FIG. 1) or bipolar junction transistors, BJTs (not shown). The half-bridge switching circuit receives an input/bus voltage V_{IN} and an input current I_{IN}.

The primary-side circuit 11 may further comprise a resonant tank circuit 114 arranged between a common electric potential of the high-side and low-side switches 111, 112 and a ground electric potential of the primary-side circuit 11.

In the example of FIG. 1, the resonant tank circuit 114 comprises an LLC circuit including a resonance choke 1141 (either a separate component, or an air gap forming part of a transformer that achieves the inductive coupling of the primary-side and secondary-side circuits 11, 12), a main inductance 1142, and a resonance capacitor 1143. Alternatively, other known topologies such as LCC may be deployed.

The main inductance 1142 comprises a primary winding (not shown) of the transformer.

The secondary-side circuit 12 comprises a secondary winding 121 of the transformer, and may further comprise a current rectifying element 122, such as a (Schottky) diode, or a switch/transistor (giving a synchronous converter) and a voltage smoothing element 123, such as a (electrolytic) smoothing capacitor.

The primary-side circuit 11 further comprises a control circuit 113, such as an application-specific integrated circuit, ASIC, a microcontroller, µC, or the like.

In particular, the control circuit 113 may comprise a proportional-integral, PI, closed-loop controller. Alternatively, other known controller types such as PID may be deployed.

The control circuit 113 is operable to progressively ramp down a predefined initial duration 221, 22, T_{on,ls} of the conduction phase of the low-side switch 112 until the converter 1 supplies a predefined target output voltage V_{LED}, as shown in FIG. 2.

In other words, during a first start-up the converter 1 has no information of the load 124 connected and therefore performs the progressive ramp-down operation.

The control circuit 113 is further operable to save the down-ramped duration 222, 22, T_{on,ls} of the conduction phase of the low-side switch 112 for future use. Accordingly, the operating point is saved when it has stabilized or when the LED driver is switched off.

The control circuit 113 is further operable to alternatingly drive the high-side switch 111 and the low-side switch 112 - the high-side switch 111 in accordance with an adjustable duration 21, T_{on,hs} of the conduction phase of the high-side switch 111 in accordance with a regulated target input peak current Î_{IN} of the converter 1, and the low-side switch 112 in accordance with the saved duration 222, 22, T_{on,ls} of the conduction phase of the low-side switch 112.

The control circuit 113 is further operable to recall the saved duration 222, 22, T_{on,ls} of the conduction phase of the low-side switch 112 following an interruption of operation of the converter 1, and proceed/return to the alternating drive operation.

This means that at further start-ups, the converter 1 then re-starts with the last settings saved.

Starting from the saved duration 222, 22, T_{on,ls} right away avoids a further ramp-down of the duration 22, T_{on,ls} of the conduction phase of the low-side switch 112. Accordingly, peak currents are avoided, which protects circuit components and avoids flicker during start-up of the converter 1. This is achieved via a simple software implementation and at no additional costs.

The control circuit 113 may further be operable to recall the saved duration 222, 22, T_{on,ls} of the conduction phase of the low-side switch 112 for use as the predefined initial duration 221, 22, T_{on,ls} following an interruption of the operation of the converter 1, and to proceed to the progressive ramp down operation.

Starting the further ramp-down of the duration 22, T_{on,ls} of the conduction phase of the low-side switch 112 from the saved duration 222, 22, T_{on,ls} taken as the predefined initial duration 221, 22, T_{on,ls} facilitates a compensation of thermic drift of the output voltage V_{LED} and the like.

The control circuit 113 may further be operable to delete the saved duration 222, 22, T_{on,ls} of the conduction phase of the low-side switch 112 following an error condition, such as an error shutdown of the converter 1 and/or an error of the load 124, and to proceed to the progressive ramp down operation.

In the very rare case of a customer changing the load 124, the converter 1 starts-up with wrong or non-ideal pre-configured settings. This in worst case could lead to an over current event or other error events (and flicker) which would trigger an error shutdown whereby also the pre-configured settings will be deleted.

Also, during any lamp error the saved settings will be deleted.

Starting the further ramp-down of the duration 22, T_{on,ls} of the conduction phase of the low-side switch 112 from scratch (i.e., from the predefined initial duration 221, 22, T_{on,ls}) thus facilitates adaptation to load changes and the like.

The control circuit 113 may further be operable to receive the saved duration 222, 22, T_{on,ls} of the conduction phase of the low-side switch 112 via a management signaling, and to proceed to the alternating drive operation.

This setting can also be preconfigured to the converter 1, to avoid a ramp-down of the duration 22, T_{on,ls} of the conduction phase of the low-side switch 112 during a first start up, when needed. Starting from the saved duration 222, 22, T_{on,ls} right away avoids a (further) ramp-down of the duration 22, T_{on,ls} of the conduction phase of the low-side switch 112. Peak currents are avoided without any initial ramp-down of the duration 22, T_{on,ls} of the conduction phase of the low-side switch 112, which again protects circuit components and avoids flicker during start-up of the converter 1.

FIG. 2 illustrates a progressive ramp-down of the duration 22 of the conduction phase of the low-side switch 112, versus an output/load/LED voltage VLED.

Note that as the output voltage V_{LED} increases (from left to right in FIG. 2), the duration 21, T_{on,hs} of the conduction phase of the high-side switch 111 increases and the duration 22, T_{on,ls} of the conduction phase of the low-side switch 112 decreases, from the predefined initial duration 221, 22, T_{on,ls} to the ramped-down duration 222, 22, T_{on,ls}.

This ramp-down of the duration 22, T_{on,ls} of the conduction phase of the low-side switch 112 is associated with undesirable peak currents.

Avoiding repetitive or all ramp-downs of the duration 22, T_{on,ls} of the conduction phase of the low-side switch 112 therefore reduces or suppresses such start-up phases involving peak currents, which protects circuit components and avoids flicker.

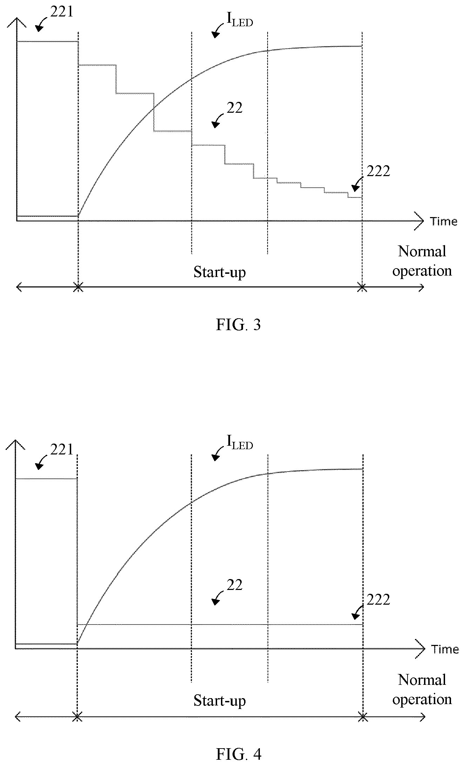

FIG. 3 schematically illustrates the progressive ramp-down of the duration 22 of the conduction phase of the low-side switch 112, versus time.

The duration 22, T_{on,ls} of the conduction phase of the low-side switch 112 is set/reduced in a plurality of steps, until the converter 1 supplies a predefined target output voltage V_{LED} (not shown), while the output current I_{LED} ramps up.

FIG. 4 schematically illustrates a step-down of the duration 22 of the conduction phase of the low-side switch 112 in accordance with the present disclosure, versus time.

The duration 22 of the conduction phase of the low-side switch 112 is set/reduced to the saved duration 222, 22, T_{on,ls} in a single step, while the output current I_{LED} ramps up.

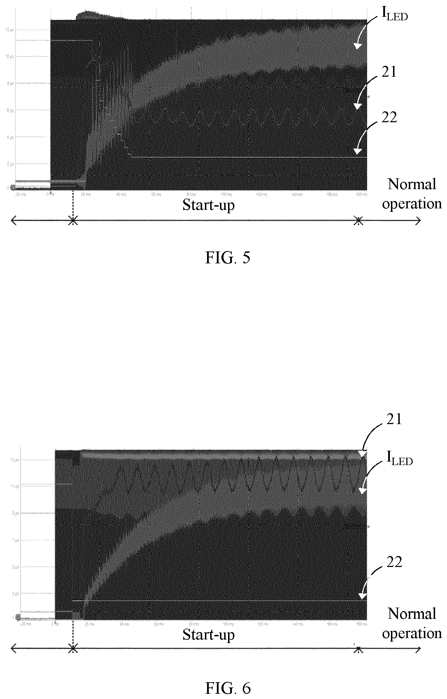

FIG. 5 illustrates a known start-up operation versus time, involving the progressive ramp-down of the duration 22 of the conduction phase of the low-side switch 112.

Like in FIG. 3, the duration 22 of the conduction phase of the low-side switch 112 is reduced in a plurality of steps, until the converter 1 supplies a predefined target output voltage V_{LED} (not shown).

Concurrently, the duration 21, T_{on,hs} of the conduction phase of the high-side switch 111 experiences a transient phase including overshooting, after which it stabilizes around a constant value.

During said transient phase, a ramp-up of the output current I_{LED} experiences undesirable peak currents.

FIG. 6 illustrates a start-up operation in accordance with the present disclosure versus time, involving the step-down of the duration 22 of the conduction phase of the low-side switch 112.

Like in FIG. 4, the duration 22 of the conduction phase of the low-side switch 112 is set/reduced to the saved duration 222, 22, T_{on,ls} in a single step.

Concurrently, the duration 21, T_{on,hs} of the conduction phase of the high-side switch 111 experiences a transient phase that involves no overshooting and is shorter than the one shown in FIG. 5, after which it stabilizes around a constant value. Note that the axis scales for the duration 21, T_{on,hs} are different in FIG. 5 and FIG. 6 - in both cases a same value is achieved upon the transition to a normal operation.

During said transient phase, a ramp-up of the output current I_{LED} hardly experiences undesirable peak currents.

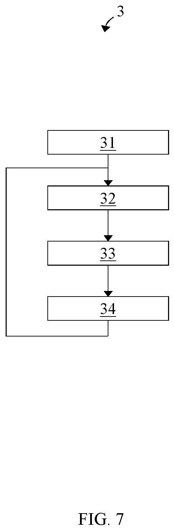

FIG. 7 illustrates a flow diagram of a method 3 of operating a resonant hybrid flyback converter 1 in accordance with the present disclosure.

The method 3 may be performed by the converter 1 of the first aspect.

The converter 1 comprises inductively coupled primary-side and secondary-side circuits 11, 12; and the primary-side circuit 11 comprises a high-side switch 111 and a low-side switch 112 arranged in series.

The method 3 comprises a step of progressively ramping down 31 a predefined initial duration 221, 22, T_{on,ls} of the conduction phase of the low-side switch 112 until the converter 1 supplies a predefined target output voltage VLED.

The method 3 further comprises a step of saving 32 the down-ramped duration 222, 22, T_{on,ls} of the conduction phase of the low-side switch 112.

The method 3 further comprises a step of alternatingly driving 33 the high-side switch 111 and the low-side switch 112 in accordance with an adjustable duration 21, T_{on,hs} of the conduction phase of the high-side switch 111 in accordance with a regulated target input peak current ÎN of the converter 1, and the saved duration 222, 22, T_{on,ls} of the conduction phase of the low-side switch 112.

The method 3 further comprises a step of recalling 34 the saved duration 222, 22, T_{on,ls} of the conduction phase of the low-side switch 112 following an interruption of operation of the converter 1, and proceeding to the alternatingly driving step 33.

The present disclosure has been described in conjunction with various implementations as examples. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A resonant hybrid flyback converter (1), comprising
inductively coupled primary-side and secondary-side circuits (11, 12);
the primary-side circuit (11) comprising a high-side switch (111) and a low-side switch (112) arranged in series; and
a control circuit (113), being operable to
- progressively ramp down a predefined initial duration (221, 22, T_{on,ls}) of the conduction phase of the low-side switch (112) until the converter (1) supplies a predefined target output voltage (V_{LED});
- save the down-ramped duration (222, 22, T_{on,ls}) of the conduction phase of the low-side switch (112);
- alternatingly drive the high-side switch (111) and the low-side switch (112) in accordance with
- an adjustable duration (21, T_{on,hs}) of the conduction phase of the high-side switch (111) in accordance with a regulated target input peak current (Î_{IN}) of the converter (1), and
- the saved duration (222, 22, T_{on,ls}) of the conduction phase of the low-side switch (112);
- recall the saved duration (222, 22, T_{on,ls}) of the conduction phase of the low-side switch (112) following an interruption of operation of the converter (1); and
- proceed to the alternating drive operation.

2. The converter (1) of claim 1,
the control circuit (113) further being operable to
- recall the saved duration (222, 22, T_{on,ls}) of the conduction phase of the low-side switch (112) for use as the predefined initial duration (221, 22, T_{on,ls}) following an interruption of the operation of the converter (1); and
- proceed to the progressive ramp down operation.

3. The converter (1) of claim 1 or claim 2,
the control circuit (113) further being operable to
- delete the saved duration (222, 22, T_{on,ls}) of the conduction phase of the low-side switch (112) following an error condition; and
- proceed to the progressive ramp down operation.

4. The converter (1) any one of the preceding claims,
the error condition comprising one or more of:
- an error shutdown of the converter (1), and
- an error of a load (2).

5. The converter (1) of any one of the preceding claims,
the control circuit (113) further being operable to
- receive the saved duration (222, 22, T_{on,ls}) of the conduction phase of the low-side switch (112) via a management signaling; and
- proceed to the alternating drive operation.

6. The converter (1) of any one of the preceding claims,
the primary-side circuit (11) further comprising a resonant tank circuit (114) arranged between a common electric potential of the high-side and low-side switches (111, 112) and a ground electric potential.

7. The converter (1) of any one of the preceding claims,
the secondary-side circuit (12) comprising a current rectifying element (122), such as a diode.

8. The converter (1) of any one of the preceding claims,
the secondary-side circuit (12) further comprising a voltage smoothing element (123), such as a smoothing capacitor.

9. The converter (1) of any one of the preceding claims,
the control circuit (113) comprising a proportional-integral, PI, closed-loop controller.

10. The converter (1) of any one of the preceding claims,
the high-side and low-side switches (111, 112) comprising field effect transistors, FETs.

11. A method (3) of operating a resonant hybrid flyback converter (1),
the converter (1) comprising
inductively coupled primary-side and secondary-side circuits (11, 12); and
the primary-side circuit (11) comprising a high-side switch (111) and a low-side switch (112) arranged in series;
the method (3) comprising
- progressively ramping down (31) a predefined initial duration (221, 22, T_{on,ls}) of the conduction phase of the low-side switch (112) until the converter (1) supplies a predefined target output voltage (V_{LED});
- saving (32) the down-ramped duration (T_{on,ls}) of the conduction phase of the low-side switch (112);
- alternatingly driving (33) the high-side switch (111) and the low-side switch (112) in accordance with
- an adjustable duration (T_{on,hs}) of the conduction phase of the high-side switch (111) in accordance with a regulated target input peak current (Î_{IN}) of the converter (1), and
- the saved duration (222, 22, T_{on,ls}) of the conduction phase of the low-side switch (112);
- recalling (34) the saved duration (222, 22, T_{on,ls}) of the conduction phase of the low-side switch (112) following an interruption of operation of the converter (1); and
- proceeding to the alternatingly driving step.

12. The method (3) of claim 11,
being performed by the converter (1) of any one of the claims 1-10.
